# EUROPEAN PATENT APPLICATION

(11) **EP 1 008 775 A2**
(43) Date of publication of application: **14.06.2000**
(21) Application number: 99124634.9
(22) Date of filing: 10.12.1999
(51) Int. Cl.: F16C 33/78

(54) **A sealing device for bearings**

(30) Priority: 11.12.1998 IT TO981036
(71) Applicant: SKF INDUSTRIE S.p.A., I-10128 Torino (IT)
(72) Inventor: Vignotto, Angelo, 10134 Torino (IT); Ruetter, Andreas, 10064 Pinerolo (Torino) (IT)
(74) Representative: Fioravanti, Corrado

(57) **Abstract**

To seal an annular gap between the races (10, 12) of a rolling bearing, a sealing device includes a sealing gasket (24) of elastomeric material adapted for being secured to one (10) of the races (10, 12). The gasket is provided with at least one sealing lip (26, 28) having at least one lip surface (26a, 28b) adapted for engaging in sliding contact at least one corresponding opposite surface (20a, 20b) secured to the other race (12) of the bearing. At least one of the two surfaces (26a, 20a; 28b, 20b) engaged in sliding contact is formed by a coating layer (40) of solid lubricant material.

## Description

The present invention refers to a sealing device for bearings.

With rolling contact bearings it is known to use sealing devices for hermetically sealing the annular gap defined between the bearing races.

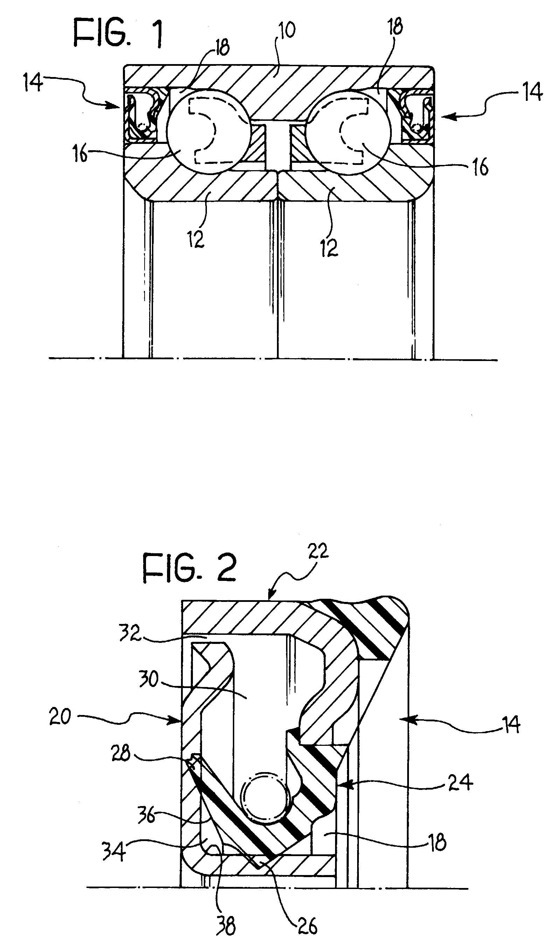

Referring to figure 1 of the attached drawings, which is a partial axial cross sectional view of a bearing equipped with sealing devices of known kind, a rolling bearing comprises a stationary, radially outer race 10 and a pair of rotating, radially inner half-races 12. Mounted to both the axial and portions of the bearing are respective sealing devices, indicated overall 14, adapted for sealing the annular gap between the inner races and the outer race. More particularly, each sealing device carries out the dual task of:
- preventing external polluting agents (water, dust, mud) from entering the inner part of the bearing where the rolling elements 16 are located; and, simultaneously
- preventing any leak of the lubricant grease which is normally confined within the inner ambient 18 of the bearing so as to lubricate the surfaces involved in the rolling.

As shown in further detail in figure 2, each sealing device comprises an annular shield 20 secured to one of the rotating inner races 20 and an annular shield 22 secured to the stationary outer race 10 and having an elastic sealing gasket 24 slidingly engaging the rotating annular shield 20. With most of the sealing devices of this kind, the sealing gasket forms a plurality of sealing lips 26, 28 which contact the opposite shield at distinct zones. As shown in figure 2, where for simplicity the gasket 24 has been depicted in an undeformed condition, the arrangement of the sealing device is such that the elements constituting it define a first annular outer chamber 30, open towards the outside at 32, and a second, hermetically sealed innermost annular chamber 34. The second chamber 34 is delimited by a gasket surface 36 comprised between the two lips 26, 28 and by a corresponding surface portion 28 of the shield 20.

Conventionally, the hermetically sealed chamber 34, intermediate between the outer chamber 30 and the inner ambient 18 of the bearing, is filled with a special lubricant grease, normally having chemical and physical features different from the grease used for lubricating the rolling parts of the bearing. Particularly, the lubricant contained within the intermediate chamber 34 serves to reduces friction generated by the outer lip 28 sliding against the shield 20, whilst the lubricant contained within the inner ambient 18 guarantees in any case a certain degree of lubrication for the innermost lip 26.

Conventional sealing devices of the above discussed type involve a number of drawbacks which adversely affect their efficiency.

The lubricant present in the intermediate chamber is necessary to reduce the friction on the lips and so also reduce the temperature during operation, besides reducing wear of the gasket lips. In absence of such lubricant, the elastomeric material which the gasket is made of would undergo quick wear and permanent deformation caused by excessively high temperature, and therefore the sealing device would quickly loose its hermetic features.

Furthermore, following prolonged periods of rest, the soft, yielding material of the gasket tends to adhere to the metallic surface of the screen that it engages, so that in beginning sliding movement again after a long inactivity, a high friction occurs with a consequent quick wear and degradation of the gasket with high temperatures rising owing to the lack of lubricant.

The elastomeric material of the gasket is moreover subjected to alteration owing to the contact with the lubricants, i.e. swelling and shrinkage, that involve an irreversible deformation of the gasket which looses the shape in which it was designed. Swelling is due to the fact that the superficial layers of the elastomeric material, which are often porous because of incomplete vulcanisation, tend to impregnate with lubricant oil. In other instances, the elastomeric material shrinks owing plasticizer substances leaking out of the polymeric material, especially with high temperature.

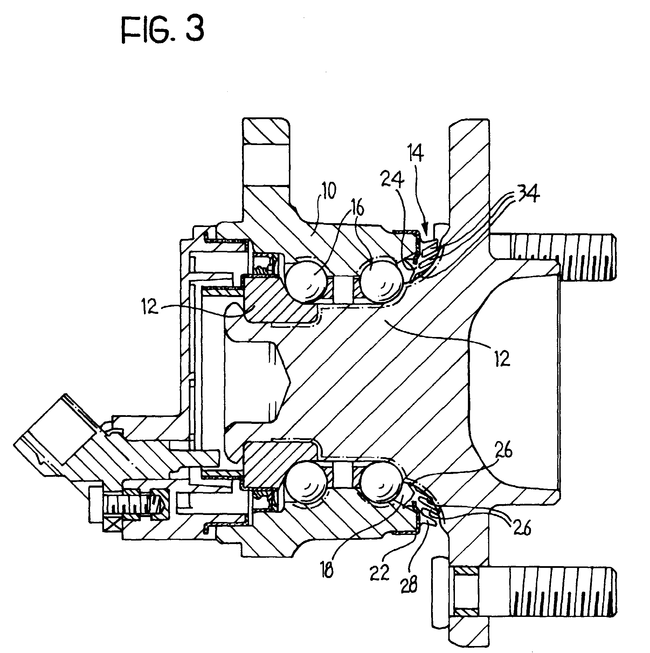

The application of lubricant in the zones of the gasket individuating the intermediate chamber the above discussed intermediate chamber is an operation which requires a high degree of accuracy. As shown for example in figure 3, with those arrangements where the gasket is provided with four sealing lips defining three adjacent intermediate chambers, the gasket manufacturer must introduce small quantities of lubricant grease between one lip and another. As will be understood, especially when dealing with small gaskets, the injection of lubricant is a delicate and expensive operation requiring the use of high precision machines. Furthermore, it is difficult to control that the lubricant grease has been applied correctly.

In addition, the lubricant must be applied in exact quantities so that it will not drip down when the gaskets (with the relevant shields to which they are vulcanised) are stocked in piles prior to mounting on the bearings. In such a case there is the risk that two adjacent gaskets may stick together and that the machine that automatically mounts the shields on the bearing should pick up and insert two gaskets instead of one, thereby running the risk of jamming or carrying out a wrong operation which could jeopardise the bearing. Besides, this drawback may otherwise occur also if the lubricant grease has been applied in the described quantity. Especially if the temperature of the stocking ambient is high, a certain amount of oil may separate from the solid part of the grease and leak on to the other gaskets of the pile with consequences similar to those above mentioned.

It should be noted that also two adjacent elastomeric gaskets which are not lubricated tend to stick together and cause the same inconvenience.

The shield manufacturer must therefore deal with different kinds of lubricant grease which have to be chosen from time to time as a function of the application of the bearing on which the sealing device is to be mounted, taking into consideration also the kind of lubricant grease that it is foreseen to be used inside the bearing, with which the lubricant grease for the sealing device must be chemically compatible.

As will be understood, a defective sealing device jeopardises the life of the bearing on which it is mounted, especially if the bearing has to work in an ambient in which there is a great quantity of polluting agents, such as is the case for motor vehicle wheel hub bearings.

It is an object of the present invention to provide an improved sealing device capable of obviating the above discussed drawbacks.

This object is accomplished, in accordance with the invention, by the provision of a sealing device as defined in claim 1.

Other important features are stated in the dependent claims.

The features and the advantages of the invention will appear from the detailed description of the few embodiments thereof, given by way of example, reference being made to the accompanying drawings, in which:
- figure 1 is a partial axial cross sectional view of a bearing equipped with a sealing device of conventional design;
- figure 2 is a view, to an enlarged scale, of the conventional sealing device of figure 1;
- figure 3 is an axial cross sectional view of a hub-bearing unit of a motor vehicle wheel equipped with another sealing device of conventional design;
- figures 4 to 8 are axial cross sectional views of several different alternative embodiments of a sealing device in accordance with the present invention.

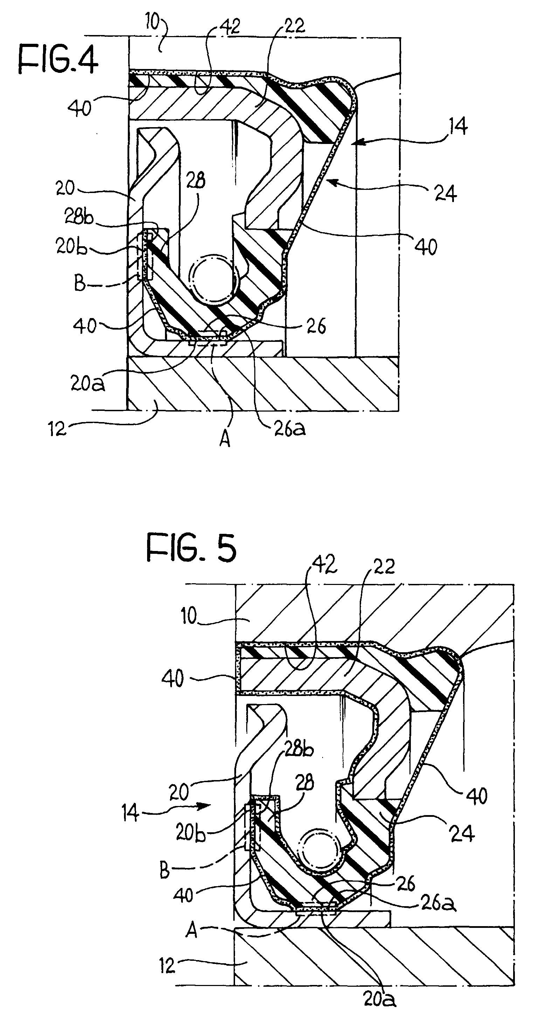

With reference to figure 4 and using the same reference numbers already used to indicate same or similar parts discussed with reference to figure 1 to 3, numeral 14 indicates overall a sealing device according to the present invention.

In brief, the sealing device 14 comprises a first annular shield 20 secured to a rotating, radially inner race 12 of a rolling bearing and a second annular shield 22 secured to a stationary, radially outer race 10 of the bearing. Fixed to the stationary shield 10 is a sealing gasket 24 of elastomeric material forming a plurality of sealing lips 26, 28 engaging the opposite shield 20 at respective surface zones of sliding contact outlined in phantom line at A and B.

According to the present invention, at least one of the elements forming a surface where such sliding contact takes place has, at said sliding contact zone, a coating layer of solid lubricant material. Materials suitable for this purpose may for example be Teflon (polytetrafluorethylene), graphite, molybdenum sulphide, silicone or other materials exhibiting in any case a low fiction coefficient.

The coating may be applied in different ways, for example by dipping in a liquid bath or by spraying. This latter technique is preferable where it is desired to provide a coating restricted to one or a few surface zones of one of the two elements, for example if it is chosen to treat only those zones involved with the sliding contact.

In the example of figure 4, a superficial coating layer of solid material 40 is formed only on that part of the outer surface of the gasket 24 including the surfaces 26 and 28 adapted for engaging in sliding contact corresponding surfaces 20a and 20b of the shield 20 at zones A and B, respectively.

In the example of figure 5, the gasket 24 already attached to the shield 22, has been dipped therewith in a liquid bath of one of the above mentioned lubricant materials, thereby obtaining a complete coating.

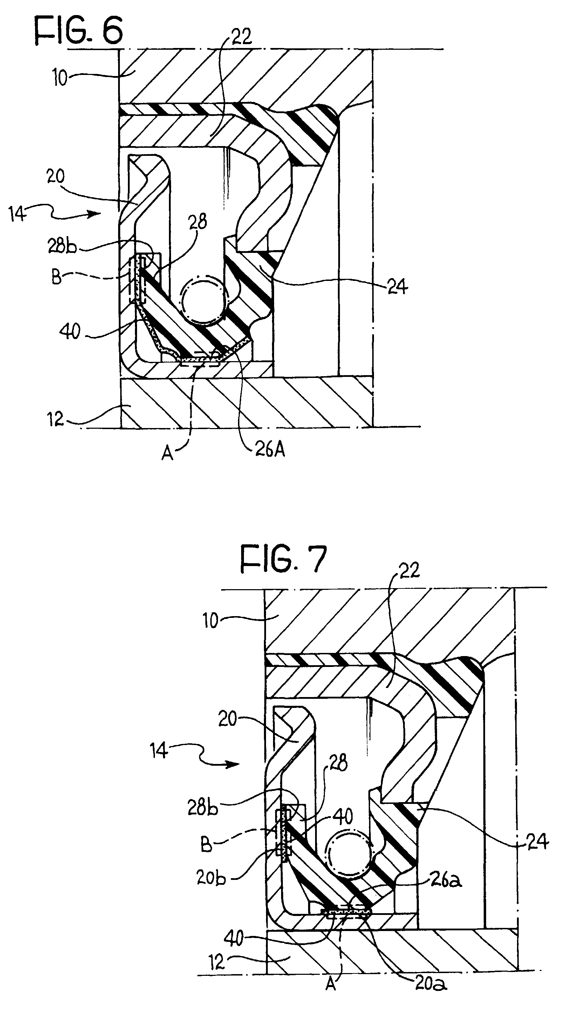

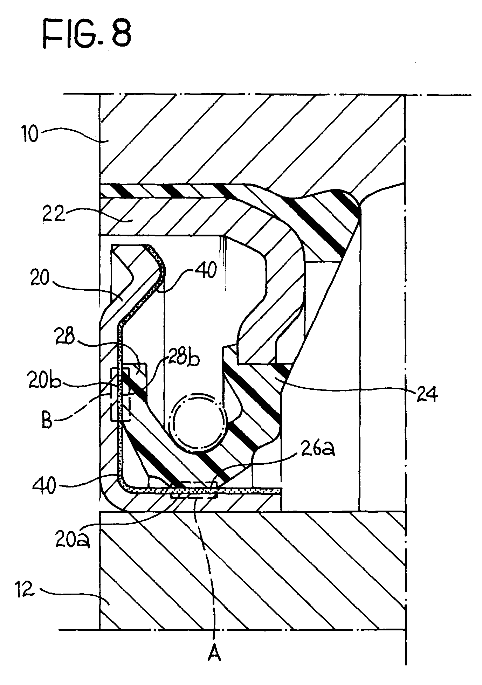

In figure 6 the solid lubricant layer 40 is limited to an outer zone of the gasket including the contact surfaces 26a and 28b, whilst in figure 7 only these two surfaces have been treated. In figure 8, instead, the gasket 24 has not been treated, whilst the solid lubricant coating has been applied on that side of the shield 20 facing in operation the gasket 24, so as to cover the superficial zones 20a and 20b contacted by the lips 28 and 26, respectively.

As will be appreciated, the sealing device in accordance with the present invention does not require any conventional lubricant grease, which allows to obviate the inconveniences set forth in the introductory part of the description.

Moreover, referring particularly to the embodiment shown in figures 4 and 5, as the radially outer surface 42 of the gasket 24 is provided with solid lubricant, there is reduced or eliminated the so called spring-back effect with which a conventional gasket tends to elastically resist forced insertion into the bearing race 10 owing to radial interference therewith. As a result, it is easier to mount the sealing device in the bearing at an axially correct position.

Naturally, the principle of the invention remaining the same, the forms of embodiment and constructional details may be varied widely with respect to what has been described and illustrated purely by way of non-limiting example, without departing from the scope of the invention as defined in the appended claims. For example, the invention is equally applicable to sealing devices having a single sliding lip.

## Claims

1. A sealing device for sealing an annular gap between the races (10, 12) of a rolling bearing, the device including a sealing gasket (24) of elastomeric material adapted for being secured to one (10) of said races (10, 12) and provided with at least one sealing lip (26, 28) having at least one lip surface (26a, 28b) adapted for engaging in sliding contact at least one corresponding opposite surface (20a, 20b) secured to the other (12) of said bearing races (10, 12), characterised in that at least one of said surfaces (26a, 20a; 28b, 20b) is formed by a coating layer (40) of solid lubricant.

2. A sealing device according to claim 1, characterised in that said superficial layer of solid lubricant (40) is provided on at least one surface (26a, 28b) of a corresponding lip (26, 28) of the sealing gasket (24).

3. A sealing device according to claim 2, characterised in that said gasket (24) provides a plurality of lips (26, 28), the surfaces (26a, 28b) of said lips adapted to slidingly contact said corresponding opposite surfaces (20a, 20b) being comprised of respective layers (40) of solid lubricant.

4. A sealing device according to claim 1, characterised in that said superficial layer of solid lubricant (40) is provided on at least one surface (20a, 20b) of an annular shield (20), said at least one shield surface (20a, 20b) being adapted for slidingly contacting at least one corresponding lip (26, 28) of the sealing gasket (24).

5. A sealing device according to claim 1, characterised in that said sealing gasket (24) includes an essentially cylindrical surface (42) adapted for contacting a seat of one (10) of the bearing races when forcefully inserting the gasket in said seat, at least part of said cylindrical surface (42) being comprised of solid lubricant.

6. A sealing device according to claim 1, characterised in that said solid lubricant is a material chosen from the group consisting of: polytetrafluorethylene, graphite, molybdenum sulphide, silicone or other materials having a low fiction coefficient.

7. A sealing device according to claim 1, characterised in that said coating layer of solid lubricant material is formed by spraying.

8. A sealing device according to claim 1, characterised in that said coating layer of solid lubricant material is formed by dipping in a liquid bath.
